# EUROPEAN PATENT APPLICATION

(11) **EP 1 684 063 A1**
(43) Date of publication of application: **26.07.2006**
(21) Application number: 06000069.2
(22) Date of filing: 03.01.2006
(51) Int. Cl.: G01N 21/55, G01N 21/07, B01L 3/00, G02B 26/08, G11B 7/135

(54) **Portable biochip scanner using surface plasmon resonance**

(30) Priority: 19.01.2005 KR 2005005023
(71) Applicant: Samsung Electronics Co., Ltd., Yeongtong-gu Suwon-si, Gyeonggi-do (KR)
(72) Inventor: Ok, Gyeong-sik, Busan-si (KR); Ma, Jang-seok, Seongnam-si Gyeonggi-do (KR)
(74) Representative: Grünecker, Kinkeldey, Stockmair & Schwanhäusser Anwaltssozietät

(57) **Abstract**

A portable biochip scanner that enables multi-channel measurement includes a surface plasmon resonance unit (44) formed in a rotational disk-shape and an optical head (50) projecting light to the surface plasmon resonance unit (44) at an angle within a predetermined range and detecting light totally-reflected from the surface plasmon resonance unit (44). The optical head (50) is movable in a radial direction of the surface plasmon resonance unit (44).
Preferably, the surface plasmon resonance unit (44) comprises a prism disk (42) formed in a ring-shape, and a micro-fluidic disk (43) coupled to a bottom of the prism disk (42). The micro-fluidic disk (42) being provided at a top surface with a plurality of micro-fluidic channels. Preferably, the optical head includes a micro-scanning mirror (52) projecting light from a light source (51) via a reflecting mirror (53) to the surface plasmon resonance unit (44).

## Description

### BACKGROUND OF THE INVENTION

### 1. Field of the Invention

The present invention relates to a portable biochip scanner using surface plasmon resonance, and more particularly, to a small-sized portable biochip scanner that enables multi-channel measurement by employing a rotational prism disk and a micro-scanning mirror.

### 2. Description of the Related Art

Fluorescence analysis has been widely used as a biomolecule analysis method. According to the fluorescence analysis, each of the biomolecules is first labeled by a fluorescent dye having a typical reaction wavelength and information such as an ingredient of the sample is then analyzed from a spectrum of light emitted from the sample by irradiating light to the sample mixed with a variety of biomolecules. However, such a fluorescence analysis has problems in that the labeling process for the sample is complicated and the fluorescent dye is expensive.

To solve the problems, a variety of methods for analyzing the biomolecules without using the fluorescent dye have been developed. One of the methods is a method using surface plasmon resonance.

The surface plasmon is a kind of surface electromagnetic waves traveling along interface between the thin metal layer and a dielectric and it has been noted that a surface plasmon resonance phenomenon occurs by a charge density oscillation generated on a surface of a thin metal layer. In an optical method for generating the surface plasmon resonance, a thin metal layer is deposited on a boundary surface between first and second media different from each other in a refractive index and light is directed to the interface surface at an angle greater than a total reflection angle. At this point, when the total reflection appears, an evanescent wave having a very short effective length is generated toward the first medium having a refractive index lower than that of the second medium on the interface surface. A thickness of the thin metal layer usually should be less than the effective length of this evanescent wave. For example, the thickness of the thin metal layer may be less than 50nm.

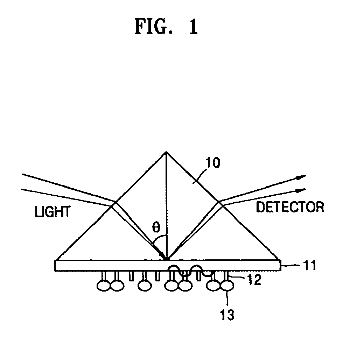

FIG. 1 shows a conventional structure incurring such surface plasmon resonance.

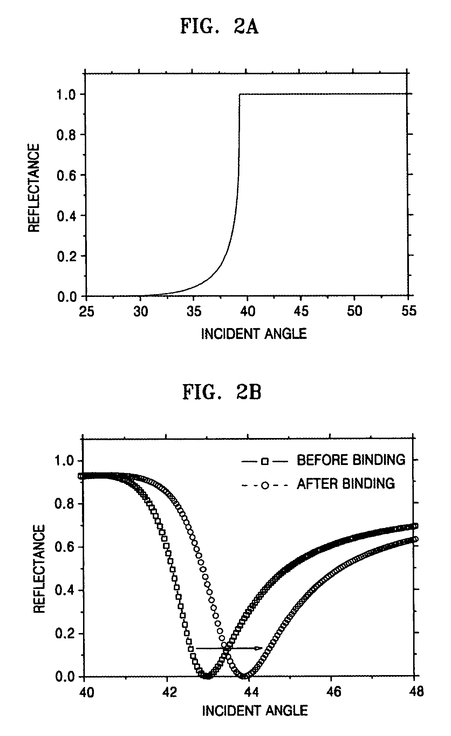

Referring to FIG. 1, a thin metal layer 11 is deposited on a bottom of a prism 10 and a dielectric 12 is deposited on the thin metal layer 11. If there is no thin metal layer 11 and dielectric 12 on the bottom of the prism 10, a variation of the reflectance according to an incident angle of light directed to the bottom of the prism will be as shown in FIG. 2A. That is, when the incident angle is higher than a critical angle, no light is transmited through the bottom of the prism 10 and all incident light thereon is reflected. However, as shown in FIG. 1, when the thin metal layer 11 and the dielectric 12 are provided on the bottom of the prism 10, all light quantums are absorbed in an interface surface between the metal layer 11 and the dielectric 12 at a specific angle larger than the total reflection angle. This is called an excitation of the surface plasmon. FIG. 2B shows a graph illustrating a reflectance when the surface plasmon resonance appears. Through FIG. 2B, it may be noted that the reflectance becomes 0(zero) by the surface plasmon resonance phenomenon at a specific angle over the total reflection angle.

The angle at which the surface plasmon appears varies in accordance with the refractive index of the dielectric 12 deposited on the thin metal layer 11. This makes it possible to detect a specific bounding of biomaterial. For example, probe molecules which can be combined with only a specific type of biomolecules is used as the dielectric 12 and is deposited on the thin metal layer 11. Then a fluid sample mixed with a variety of biomolecules is fed to the dielectric 12. At this point, when the specific type of biomolecules 13 is combined with the dielectric 12 composed of the probe molecules, the overall refractive index is varied and the reflectance curve is shifted from a curve A to a curve B as shown in FIG. 2B. Accordingly, when the light is incident onto the bottom of the prism 10 and the reflectance is measured, it can be identified what type of biomolecules are existed.

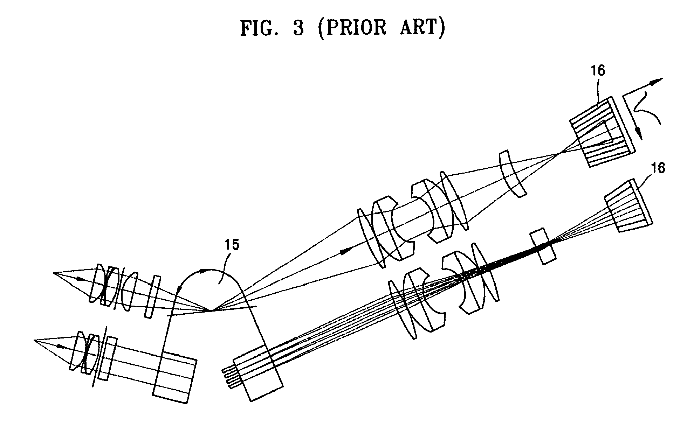

FIGS. 3 through 5 show conventional biomolecule detecting apparatuses using such a surface plasmon resonance phenomenon.

U.S. Patent No. 5,313,264 discloses an apparatus depicted in FIG. 3. According to this apparatus, light is incident onto a prism 15 at a predetermined incident angle and the reflectances according to various angles are detected at once by a two-dimensional detector 16 such as a charge coupled device (CCD). An upper portion in FIG. 3 is a side sectional view and a lower portion in FIG. 3 is a plane view. It can be noted through the plane view in FIG. 3 that it can be possible to simultaneously measure a multi-channel sample by allowing a variety of lights to be incident. In the detecting apparatus depicted in FIG. 3, since the large-area CCD required for precisely detecting the reflection index is very expensive, the manufacturing cost is increased. Furthermore, since the light path is long, it is impossible to make the apparatus in a small size. In addition, the number of channels that can be detected at once is limited.

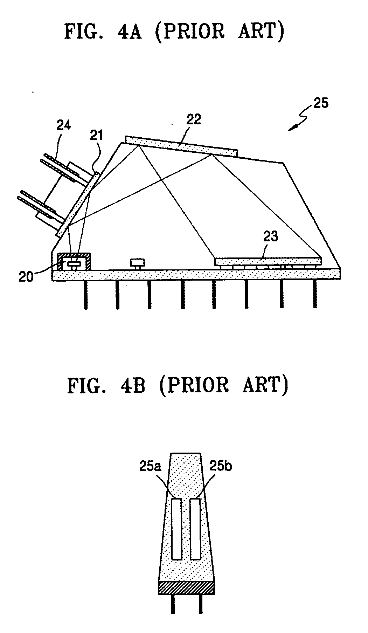

U.S. Patent No. 5,898,503 discloses a detecting apparatus depicted in FIG. 4a. According to this apparatus, light emitted from a light source 20 at a predetermined angle is totally-reflected onto a first reflective surface 21 and is then reflected onto a two-dimensional detector or a detector array 23 via a second reflective surface. At this point, a fluid sample flows on an outer surface of the first reflective surface 21. Although the apparatus depicted 25 in FIG. 4a can be made in a small size, it has a disadvantage in that that only one channel can be detected at a time. Although two detecting apparatuses are connected in parallel as shown in FIG. 4b so that two channels can be detected at a time, there is a limitation in increasing the number of the channels that can be detected at a time. Furthermore, since the angle resolution is proportional to a distance between the detector 23 and the sample (i.e., a distance between the detector 23 and the first reflective surface 21), when the distance between the detector 23 and the sample is shortened to reduce the size of the apparatus, the resolution is deteriorated.

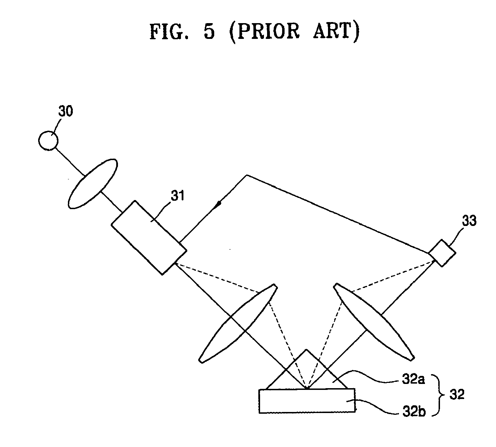

Meanwhile, a detecting apparatus 30 depicted in FIG. 5 is designed to measure the reflectance by measuring an intensity of a light beam at a boundary surface of a prism 32a and a sample 32b using a detector 33. Since the detecting apparatus is designed in a simple structure and there is no need of using the expensive two-dimensional detector, it can be inexpensively manufactured in a small size. In addition, since the incident angle can be precisely adjusted using a scanner 31, the angle resolution can be improved and the detecting speed can be increased by making the scanning speed fast. However, this apparatus is also designed to detect only one channel at a time, deteriorating the efficiency.

As described above, no conventional biomolecule detecting apparatus that can simultaneously satisfy all the miniaturization, inexpensiveness, a multi-channel detection, and high precision has been proposed.

### SUMMARY OF THE INVENTION

The present invention provides a portable biochip scanner using a surface plasmon resonance for a biomolecule detection, wherein the scanner is simple, has small-sized structure, can precisely perform high-speed measurement and simultaneously measures a plurality of channels.

According to an aspect of the present invention, there is provided a portable biochip scanner including: a surface plasmon resonance unit formed in a rotational disk-shape; and an optical head projecting light to the surface plasmon resonance unit at an angle within a predetermined range and detecting light totally-reflected from the surface plasmon resonance unit, wherein the optical head is movable in a radial direction of the surface plasmon resonance unit.

The surface plasmon resonance unit may include: a prism disk formed in a ring-shape; and a micro-fluid disk coupled to a bottom of the prism disk, the micro-fluid disk being provided at a top surface with a plurality of micro-fluid channels.

The optical head may include: a light source unit emitting parallel light; micro-scanning mirror projecting light emitted from the light source unit at an angle within a predetermined range while pivoting with a predetermined frequency; a reflective mirror reflecting the light projected from the micro-scanning mirror to the prism disk; and a photo detector detecting light totally-reflected from the bottom of the prism disk.

The prism disk may be provided at the bottom with a plurality of concentric thin metal layer tracks for generating surface plasmon resonance. A plurality of probe molecules which can be combined with a specific biomolecule are attached on the thin metal layers.

The micro-fluid channels formed on the top of the micro-fluid disk may cross the micro-fluid disk while crossing the thin metal tracks formed on the prism disk.

The portable biochip scanner may further include a motor for rotating the surface plasmon resonance unit.

The portable biochip scanner may further include a thermostat for uniformly maintaining a temperature of the micro-fluid flowing in the surface plasmon resonance unit. The thermostat may be formed of a peltier device.

The micro-scanning mirror may be designed to project light in a direction vertical to a circumferential direction of the prism disk. The micro-scanning mirror may be made by a micro-electro-mechanical system technology. The predetermined frequency of the micro-scanning mirror may be in a range of 10-30kHz.

The reflective mirror may be a concave mirror converging the light projected at a variety of angles by the micro-scanning mirror.

Alternatively, the reflective mirror may be a planar mirror and an f-θ lens may be disposed between the planar mirror and the micro-scanning mirror to correct aberration and converge the light projected by the micro-scanning mirror.

The optical head may be designed to transmit two parallel lights to the bottom of the prism disk and two detectors detect and compare the respective two lights totally-reflected from the prism disk to correct a detection error.

### BRIEF DESCRIPTION OF THE DRAWINGS

The above and other features and advantages of the present invention will become more apparent by describing in detail exemplary embodiments thereof with reference to the attached drawings in which:
FIG. 1 is a schematic view of a prism structure generating a surface resonance;
FIG. 2A is a graph illustrating a reflectance according to an incident angle on a prism on which a thin metal layer is not deposited;
FIG. 2B is a graph illustrating a reflectance according to an incident angle at a prism on which a thin metal layer is deposited;
FIGS. 3 through 5 are schematic views illustrating a variety of conventional biomolecule detecting apparatuses using a surface plasmon resonance;
FIG. 6 is a perspective view of a portable biochip scanner according to an embodiment of the present invention;
FIG. 7 is a side sectional view of a portable biochip scanner according to an embodiment of the present invention;
FIG. 8A is a bottom perspective view of a prism disk of a portable biochip scanner according to an embodiment of the present invention;
FIG. 8B is a view illustrating a top surface of a micro-fluid disk of a portable biochip scanner according to an embodiment of the present invention;
FIG. 8C is a perspective view of a state where a prism disk depicted in FIG. 8A and a micro-fluid disk depicted in FIG. 8B are coupled to each other;
FIG. 9 is a view illustrating an example structure of a micro-scanning mirror that may be used in an embodiment of the present invention;
FIGS. 10A and 10B are views illustrating a variety of examples of optical heads that may be used in an embodiment of the present invention;
FIGS. 11A through 11C are views illustrating a size of a beam walk according to a rotation of a disk; and
FIG. 12 is a schematic view of an optical head of a portable biochip scanner according to another embodiment of the present invention.

### DETAILED DESCRIPTION OF THE INVENTION

The present invention will now be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art.

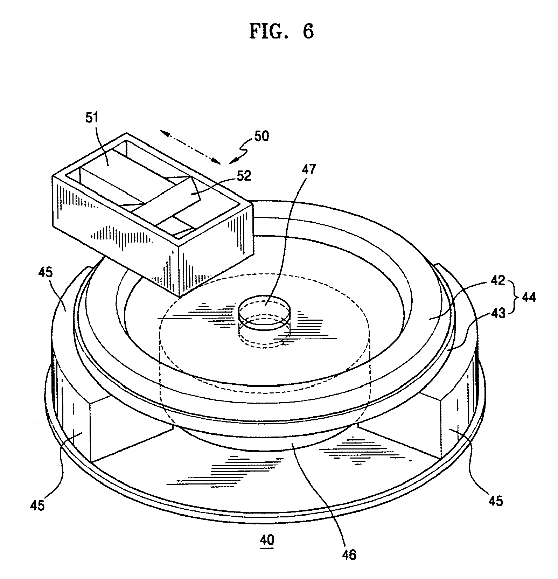

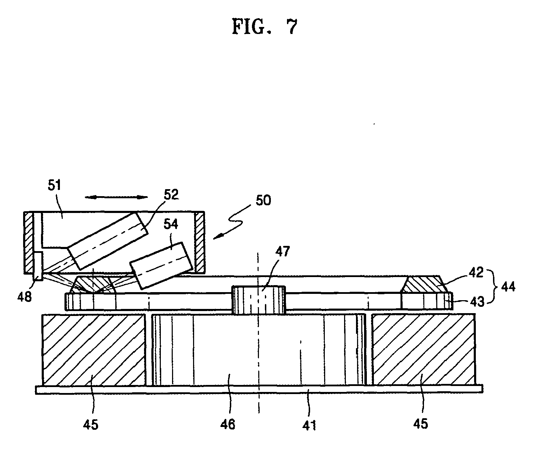

FIGS. 6 and 7 show a portable biochip scanner according to an embodiment of the present invention.

Referring first to FIG. 6, the inventive portable biochip scanner 40 includes a prism disk 42 having a ring-shaped form, a micro-fluid disk 43 coupled to a bottom of the prism disk 42, and an optical head 50 emitting light to the prism disk 42 and detecting the light totally-reflected from the prism disk 42. The prism disk 42 functions to generate surface plasmon resonance and the micro-fluid disk 43 functions to provide micro-fluid, which is to be measured, to the prism disk 42. The prism disk 43 and the micro-fluid disk 43 are coupled to each other to define surface plasmon resonance unit 44, rotating together around a shaft 47. The optical head 50 scans the prism disk 42 to detect reflectance variation that is incurred by the surface plasmon resonance. The optical head 50 is designed to be capable of reciprocating in a radial direction of the surface plasmon resonance unit 44.

Referring to FIG. 7, a direct current (DC) motor 46 is mounted on a printed circuit board (PCB) 41. The surface plasmon resonance unit 44 is coupled to a shaft 47 of the DC motor 46. In addition, a thermostat 45 is disposed on the PCB 41. The surface plasmon resonance unit 44 is disposed above the thermostat 45 at a predetermined distance. The thermostat 45 functions to uniformly maintain a temperature of the micro-fluid flowing in the micro-fluid disk 43. The thermostat 45 may be formed of a peltier device. The thermostat 45 may be installed on both sides of the DC motor 46 or installed to enclose the overall outer surface of the DC motor 46.

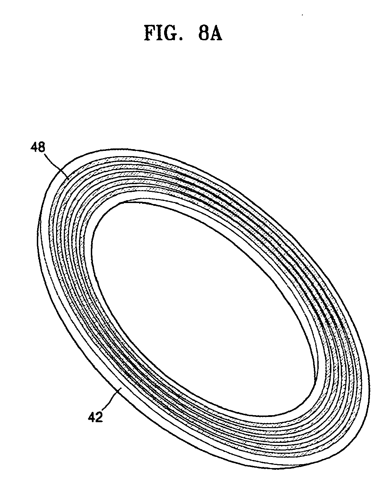

As described above, the surface plasmon resonance unit 44 is defined by the prism disk 42 and the micro-fluid disk 43. The prism disk 42 is ring-shaped having a top surface having a width less than that of a bottom surface on which the total reflection appears. The outer and inner circumferences of the prism disk 42 functions as light incoming and outgoing surfaces, respectively. As shown in FIG. 8A, a plurality of concentric thin metal tracks 48 are formed on the bottom of the prism disk 42 in a circumferential direction to detect a plurality of channels. As described above, in order to generate the surface plasmon resonance, a thin metal layer should be deposited on the bottom of the prism. And, a thickness of the thin metal layer may be less than 50nm. Furthers probe molecules (not shown) which can be combined with a specific biomolecule are attached on the thin metal layer. According to the preferred embodiment of the invention, different types of the probe molecules may be attached along the circumferential direction of the thin metal tracks 48. That is, different types of the probe molecules may be attached on respective different radial angles in the single thin metal track 48. In order to attach a plurality of probe molecules on the thin meal tracks 48, the single metal track 48 may comprised of a plurality of thin metal films deposited along the track 48 at a predetermined distance from each other.

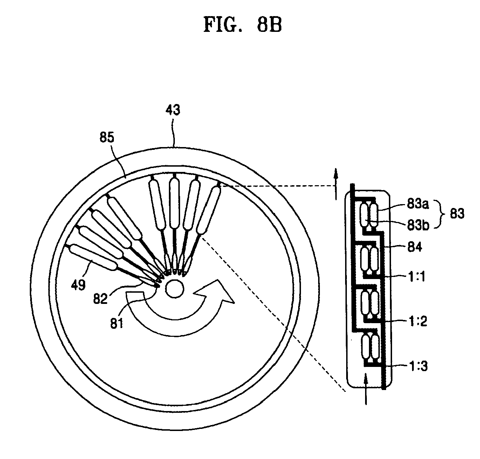

In order to provide the micro-fluid sample on the bottom of the prism disk 42, as shown in FIG. 8B, a plurality of micro-fluid channels 49 are formed on a top of the micro-fluid disk 43. FIG. 8C shows a state where the prism disk 42 and the micro-fluid disk 43 are combined with each other. As shown in FIG. 8C, the prism disk 42 and the micro-fluid disk 43 are combined with each other such that the bottom of the prism disk 42 faces the top of the micro-fluid disk 43. Accordingly, the micro-fluid channels 49 formed on the top of the micro-fluid disk 43 cross the micro-fluid disk 43 while crossing the thin metal tracks 48 formed on the prism disk 42. Therefore, the biomolecules are combined with a specific probe molecule attached on the thin metal tracks 48 of the prism disk 42 while flowing along the micro-fluid channels 49 of the micro-fluid disk 43.

The micro-fluid channels 49 formed on the top of the micro-fluid disk 43 will be described in more detail hereinafter with reference to FIG. 8B. As shown in FIG. 8B, a circular waste reservoir 85 is formed on a top periphery of the micro-fluid disk 43. The micro-fluid channels 49 are connected to the waste reservoir 85 while extending toward the center of the micro-fluid disk 43. That is, the micro-fluid channels 49 are formed in a radial direction of the micro-fluid disk 43 and sample reservoirs 82 for storing the samples are formed by extending from the respective micro-fluid channels 49. A sample injection hole 81 is formed on each upper end of the sample reservoirs 82, which is close to the center of the disk 43. At this point, the number of the sample reservoirs 82 should be identical to that of the thin metal films in each track 48.

Meanwhile, the detailed structure of the micro-fluid channels 49 is depicted in a right side of FIG. 8B. Referring to FIG. 8B, the samples stored in the sample reservoirs 82 slowly move to sample chambers 83 along the respective flow channels 84 when the an RPM of the micro-fluid disk 43 reaches a predetermined level. Surfaces of the flow channels 84 are processed to be hydrophobic. The flow rate of the fluid depends on a structure or size of the channels or the RPM of the disk 43. At this point, if four thin metal tracks 48 are formed on the prism disk 42, four sample chambers 83 are required for one micro-fluid channel 49. In addition, the sample chamber 83 may be defined by a pair of chambers 83a and 83b adjacent to each other. For example, a left sample chamber 83a of the pair of sample chambers 83a and 83b is for detecting an actual sample through the surface plasmon resonance and a right sample chamber 83b is for providing a reference signal used for compensating for a detecting error caused by an assembling tolerance that will be described in more detail later. In this case, eight chambers are required.

When each of the samples flows from the one sample reservoir 82 to the four sample chambers, as shown in FIG. 8B, it will flows in the ratios of 1:3, 1:2 and 1:1 in order of the nearest one. For example, when a 100-volume sample flows out from the sample reservoir 82, only a 25-volume sample flows into a first sample chamber while a 75-volume sample flows to next sample chambers along the flow channel 84. Among the 75-volume sample, a 25-volume sample flows into a second sample chamber while a 50-volume sample flows to next sample chambers. Among the 50-volume sample, a 25-volume sample flows into a third sample chamber while a rest 25-volume sample flows to a fourth sample chambers. Such a fluid flow may be easily realized by properly designing the flow channels 84. At this point, the fluid sample supplied to each of the sample chambers 83 are equally dispensed to the pair of chambers 83a and 83b through two channels for the actual sample detection and the reference signal measurement.

Next, the sample, which has gone through all of the sample chambers 83, reacts around the thin metal track and is exhausted and stored in the circular waste reservoir 85.

Referring again FIG. 7, the optical head 50 detecting the reflectance variation incurred by the surface plasmon resonance while scanning the prism disk 42 includes a light source unit 51, a micro-scanning mirror 52, a reflective mirror 53, and a photodetector 54. The light source unit 51 emits parallel light having a predetermined wavelength to the scanning mirror 52. The light source unit 51 may include a laser diode (not shown) and a collimating lens (not shown) disposed in front of a light emitting surface of the laser diode. The micro-scanning mirror 52 is a small mirror that pivots with a predetermined frequency to project the light emitted from the light source unit 51 at an angle within a predetermined range. The reflective mirror 53 reflects the light projected by the scanning mirror 51 toward the bottom of the prism disk 42. The photodetector 54 measures the light intensity by detecting the totally-reflected light from the prism disk 42.

The micro-scanning mirror 52 used in the present invention may be formed of a well-known optical scanner used to form an image by deflecting an image signal with a high speed in a laser projection TV. For example, such a micro mirror is disclosed in detail in commonly assigned Korean Pat. Application Nos. 10-2000-0010469 (February 27, 2002) and 10-2000-51407(August 24, 2001). The micro-scanning mirror uses electro static effect by a comb-type electrode and it can be very precisely manufactured according to a micro-electro-mechanical systems (MEMS) technology.

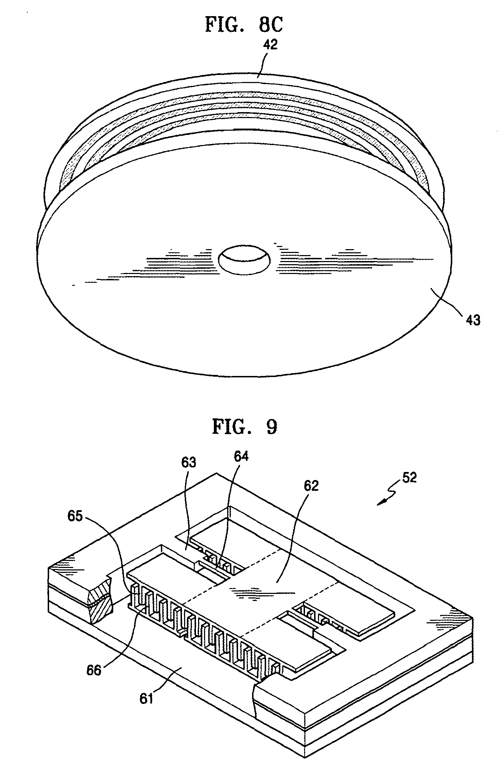

FIG. 9 shows an example of the micro-scanning mirror 52. As shown in FIG. 9, the optical scanner includes a mirror unit 62 suspended on a substrate 61, a support 63 supporting opposite ends of the mirror unit 62, a torsion spring 64 disposed between the mirror unit 62 and the support 63 to support the pivot movement of the mirror unit 62, a plurality of movable comb electrodes 65 vertically formed on both sides of the mirror unit 62, and a plurality of static comb electrodes 66 disposed alternately with the movable comb electrodes 65 on the substrate 61. A polarity of the voltage applied to the movable comb electrodes 65 is opposite to that of the voltage applied to the static comb electrodes 66. Therefore, static electric force is generated between the electrodes to pivot the mirror unit 62 with high speed. This micro-scanning mirror 52 may be manufactured in a subminiature size using a 1-10mm sized mirror, allowing the high scanning speed of about 10-30kHz. The operation of the micro-scanning mirror 52 will be omitted herein as it is well-know in the art.

Meanwhile, the light scanned by the micro-scanning mirror 52 is incident to a point on the bottom of the prism disk 42 while being varied in a variety of angles. To realize this, the light reflected by the micro-scanning mirror 52 should be converged.

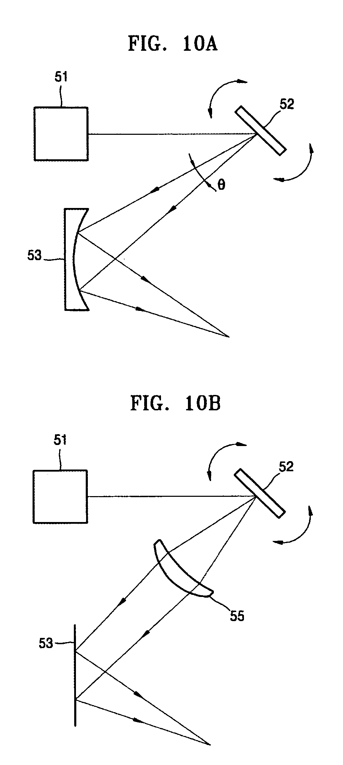

FIG. 10A shows an exampled structure for converging the light.

As shown in FIG. 10A, in order to converge the light reflected from the scanning mirror 52, a concave mirror may be used as the reflective mirror 53.
Alternatively, as sown in FIG. 10B, an F-θ lens 55 that has been used in a light scanning unit of a laser printer may be used. The F-θ lens 55 functions to correct aberration incurred by the micro-scanning mirror 52 as well as to converge the light scanned by the micro-scanning mirror 52. In this case, a planar mirror is used as the reflective mirror 53.

The operation of the above-described portable biochip canner will be described in more detail hereinafter.

When the motor 46 rotates at a predetermined RPM, the micro-fluid sample flows along a path depicted in a right portion of FIG. 8B via the micro-fluid channels 49 formed on the micro-fluid disk 43. At the same time, the surface plasmon resonance unit 44 coupled to the shaft 47 of the motor 46 rotates together. At this point, the optical head performs the tracking operation along one of the concentric thin metal tracks 48 formed on the prism disk 42 to emit light to the current tracking metal track. The light projected from the light source unit 51 is incident to the thin metal tracks of the prism disk 42 at a variety of angles by the micro-scanning mirror 52 and the reflective mirror 53. According to the incident angle, the light is totally-reflected from the bottom of the prism disk 42 or absorbed through the bottom of the prism disk 42. In addition, when the biomolecule is combined to the probe molecules attached on each specific azimuth angle of the current tracking thin metal track 48, the absorption angle by the surface plasmon resonance is varied by the variation of the refractive index. The photodetector 54 measures the intensity of the totally-reflected light to calculate the angle where the surface plasmon resonance is incurred. Accordingly, it becomes possible to find out a material existed in the micro-fluid sample. When the measurement of the current tracking thin metal track is finished, the optical head 50 moves in a radial direction of the surface plasmon resonance unit 44 to start measuring another one of the thin metal tracks 48 of the prism disk 42.

As described above, in the present invention, an incident angle at which surface plasmon resonance incurs is measured to obtain information on which kind of material exists in a micro-fluid sample. Accordingly, there is no need to calculate the reflectance at all incident angles. In other words, it is preferable to make light incident over a range of angles for quick and effective measurement. In general, angles at which surface plasmon resonance occurs vary by less than 10°for different materials. Therefore, it is preferable to vary the incident angle by less than 10°. For example, light may be incident at an angle of 40-50°.

Meanwhile, when the scanning speed (i.e., the frequency) of the micro-scanning mirror 52 is slow, the size of the beam walk in the azimuth direction becomes too large during the scanning period to accurately perform the detection. To solve this problem, the size of the beam walk in the radial direction during the scanning period should be as small as possible.

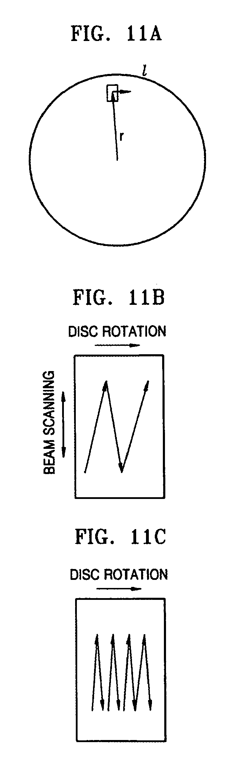

FIGS. 11A through 11 C illustrate the size of the beam walk according to the rotation of the disk.

In FIG. 11A, a portion represented by a square is a portion that is currently scanned, in which the reference character r is a radius from a rotational center to a current scanning location. As indicated by an arrow, it is assumed that the disk rotates clockwise. In the present invention, the micro-scanning mirror 52 projects light in a direction vertical to the radial direction of the prism disk 42. Therefore, the beam walk 42 is represented as shown in FIGS. 11 B and 11 C. Here, FIG. 11 B shows a case where the scanning speed is relatively low and FIG. 11 C shows a case where the scanning speed is relatively high. When the radius r is 20nm and the disk speed is 600rpm, the moving speed in the radial direction becomes 1.2mm/ms. In this case, when the scanning speed of the micro-scanning mirror 52 is 1kHz, the micro-scanning mirror moves b y 1.2mm during the one scanning period. When the scanning speed is 30kHz, since the micro canning mirror 52 moves by only 0.04mm during the one scanning period, it can be regarded there is few movement. As described above, since the micro-scanning mirror 52 of the present invention performs the scanning operation within a range of 10-30kHz, the detection can be accurately realized.

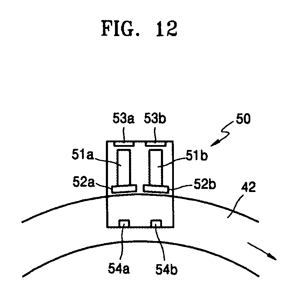

FIG. 12 shows an optical head of a portable biochip scanner according to another embodiment of the present invention. As shown in FIG. 12, the optical head 50 includes first and second light source units 51 a and 51 b, first and second micro-scanning mirrors 52a and 52b, first and second reflective mirrors 53a and 53b, and first and second photodetectors 54a and 54b. In general, a surface plasmon resonance unit 44 cannot optimally rotate due to an assembly tolerance and may perform unstable rotation, such as precession. The rotation of the surface plasmon resonance unit 44 may become irregular due to external effects, such as vibration. As a result, the incident angle to the bottom of the prism disk 42 may be different from the desired incident angle. Since the light absorption incurred by the surface plasmon resonance may be greatly varied even by the micro variation of the incident angle, it is difficult to obtain the accurate detection result.

To solve this problem, it is designed that the detection error may be corrected by using one light in measuring the reflective index using the surface plasmon resonance and by using the other light in correcting the error by tracking the incident angle variation caused by the above-described causes. For example, the light emitted from the first light source unit 51 a is used to detect the actual sample using the surface plasmon resonance from a first sample chamber 83a and the light emitted from the second light source unit 51 b is designed to receive only a reference signal from a second sample chamber 83b. By comparing the reflective light from the first sample chamber 83a with that from the second sample chamber 83b, the error can be corrected. To realize this, probe molecules are attached on the track of the thin metal track 48 corresponding to the first sample chamber 83a while no molecule is attached on the track of the thin metal track 48 corresponding to the second sample chamber 83b. While the specific biomolecule in the fluid sample is not combined with the probe molecules, the two reflective lights will be identically varied even when there is disturbance due to the assembling tolerance or other outer environments. However, when the specific biomolecule is combined with the probe molecules, the two reflective lights will be differently varied. Therefore, the detection can be accurately realized even when there is disturbance due to the assembling tolerance or other outer environments.

Although each of the light source unit, micro-scanning mirror, reflective mirror and photodetector is provided by two, the present invention is not limited to this case. For example, it is possible that light emitted from a single light source unit may be divided into two lights by a beam splitter and the divided lights are reflected by a single micro-scanning mirror and a single reflective mirror, after which the reflected lights are detected by two photodetectors

According to the present invention, since the structure is simplified by employing a rotational prism disk and a rotational micro-scanning mirror, it is possible to inexpensively make the portable biochip scanner. In addition, it is possible to measure a plurality of channels using only a single low-power light source and a single photodetector. Furthermore, since the micro-scanning mirror used in the laser TV is designed to precisely adjust the angle and to make it possible to perform the high speed scanning, the biochip scanner using the micro-scanning mirror can perform the precise, high speed measurement.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A portable biochip scanner comprising:
a surface plasmon resonance unit formed in a rotational disk-shape; and
an optical head projecting light to the surface plasmon resonance unit at an angle within a predetermined range and detecting light totally-reflected from the surface plasmon resonance unit,
wherein the optical head is movable in a radial direction of the surface plasmon resonance unit.

2. The portable biochip scanner of claim 1, wherein the surface plasmon resonance unit comprises:
a prism disk formed in a ring-shape; and
a micro-fluid disk coupled to a bottom of the prism disk, the micro-fluid disk being provided at a top surface with a plurality of micro-fluid channels.

3. The portable biochip scanner of claim 2, wherein the prism disk is provided at the bottom with a plurality of concentric thin metal tracks for generating surface plasmon resonance.

4. The portable biochip scanner of claim 3, wherein each of the thin metal tracks is deposited with thin metal films for generating the surface plasmon resonance.

5. The portable biochip scanner of claim 4, wherein a plurality of probe molecules which can be combined with a specific biomolecules are attached on the thin metal films.

6. The portable biochip scanner of claim 3, wherein the micro-fluid channels formed on the top of the micro-fluid disk cross the micro-fluid disk while crossing the thin metal tracks formed on the prism disk.

7. The portable biochip scanner of claim 6, wherein a circular waste reservoir is further formed on the micro-fluid disk and the micro-fluid channels are connected to the waste reservoir while extending toward the center of the micro-fluid channels.

8. The portable biochip scanner of claim 6, wherein sample reservoirs for storing the samples are formed by extending from the respective micro-fluid channels and a sample injection hole is formed on each of the sample reservoirs.

9. The portable biochip scanner of claim 8, wherein each of the micro-fluid channels comprises a plurality of sample chambers corresponding to the respective thin metal tracks and a flow channel transmitting the micro-fluid from the sample reservoirs to the sample chambers.

10. The portable biochip scanner of claim 1, further comprising a motor for rotating the surface plasmon resonance unit.

11. The portable biochip scanner of claim 1, further comprising a thermostat for uniformly maintaining a temperature of the micro-fluid flowing in the surface plasmon resonance unit.

12. The portable biochip scanner of claim 11, wherein the thermostat is formed of a peltier device.

13. The portable biochip scanner of claim 1, wherein the optical head comprises:
a light source unit emitting parallel light;
a micro-scanning mirror projecting light emitted from the light source unit at a predetermined angle while pivoting with a predetermined frequency;
a reflective mirror reflecting the light projected from the micro-scanning mirror to the prism disk; and
a photo detector detecting light totally-reflected from the bottom of the prism disk.

14. The portable biochip scanner of claim 13, wherein the micro-scanning mirror projects light in a direction vertical to a circumferential direction of the prism disk.

15. The portable biochip scanner of claim 13, wherein the micro-scanning mirror is made by a micro-electro-mechanical system technology.

16. The portable biochip scanner of claim 13, wherein the predetermined frequency of the micro-scanning mirror is in a range of 10-30kHz.

17. The portable biochip scanner of claim 13, wherein the reflective mirror is a concave mirror converging the light projected at a variety of angles by the micro-scanning mirror.

18. The portable biochip scanner of claim 13, wherein the reflective mirror is a planar mirror and an f-θ lens is disposed between the planar mirror and the micro-scanning mirror to correct aberration and converge the light projected by the micro-scanning mirror.

19. The portable biochip scanner of claim 13, wherein the optical head transmits two parallel lights to the bottom of the prism disk and two detectors detect and compare the respective two lights totally-reflected from the prism disk to correct a detection error.
